# EUROPEAN PATENT APPLICATION

(11) **EP 1 482 669 A1**
(43) Date of publication of application: **01.12.2004**
(21) Application number: 03012444.0
(22) Date of filing: 30.05.2003
(51) Int. Cl.: H04L 1/18

(54) **A method and receiver for buffering data employing HARQ and two stage rate matching**

(62) Divisional of application: 03029452.4
(71) Applicant: MATSUSHITA ELECTRIC INDUSTRIAL CO., LTD., Kadoma-city, Osaka 571-8501 (JP)
(72) Inventor: Wengerter, Christian, 63924 Kleinheubach (DE); Suzuki, Hidetoshi, Yokosuka-shi, Kanagawa 239-0847 (JP)
(74) Representative: Grünecker, Kinkeldey, Stockmair & Schwanhäusser Anwaltssozietät

(57) **Abstract**

A method and receiver for buffering data at the receiver of a packet transmission communication system employing hybrid ARQ types II/III and adaptive coding and modulation schemes, wherein the adaptive coding is performed by a two-stage matching algorithm. The invention underlies two principal ideas. The first one is based on the recognition that the buffer for storing the incoming data bit stream is only needed temporarily until the first de-rate mapping operation is completed. It can therefore be used afterwards for storing the data bits obtained upon completion of the second de-rate matching operation. This approach helps to reduce the required buffer size at the receiver and also reduces its complexity. The second idea is to utilize the separation of the data bit streams into a plurality of data bit substreams and to input at least one data bit substreams to the decoder without performing a second de-rate matching and storing operation. This is based on the consideration that the decoder may access at least one of the data bit substreams directly from the HARQ buffer. Consequently, the size of the temporary buffer can be reduced also resulting in simplifying the receiver.

## Description

This invention relates to packet transmission communication systems employing link adaptation by hybrid Automatic Repeat reQuest (ARQ) and Adaptive Modulation and Coding (AMC) techniques. A particular application is High Speed Downlink Packet Access (HSDPA) within the 3GPP standard.

A common technique for error detection and correction in packet transmission systems over unreliable channels is called hybrid ARQ, which is a combination of Forward Error Correction (FEC) and ARQ as described for example in S. Lin, D.J. Costello, M.J. Miller, "Automatic-repeat-request error-control schemes," *IEEE Commun. Mag.,* vol. 22, no. 12, pp. 5-17, December 1984.

If an FEC encoded packet is transmitted and the receiver fails to decode the packet correctly (errors are usually checked by a CRC (Cyclic Redundancy Check)), the receiver requests a retransmission of the packet. Generally (and throughout this document), the transmission of additional information is called "retransmission (of a packet)", although this retransmission does not necessarily mean a transmission of the same encoded information, but could also mean the transmission of any information belonging to the packet (e.g. additional redundancy information).

Depending on the information (generally code-bits/symbols), of which the transmission is composed of, and depending on how the receiver processes the information, the following hybrid ARQ schemes are defined:

Type I: If the receiver fails to decode a packet correctly, the information of the encoded packet is discarded and a retransmission is requested. This implies that all transmissions are decoded separately. Generally, retransmissions contain identical information (code-bits/symbols) to the initial transmission.

Type II: If the receiver fails to decode a packet correctly, a retransmission is requested, where the receiver stores the information of the (erroneous received) encoded packet as soft information (soft-bits/symbols). This implies that a soft-buffer is required at the receiver. Retransmissions can be composed out of identical, partly identical or non-identical information (code-bits/symbols) according to the same packet as earlier transmissions. When receiving a retransmission the receiver combines the stored information from the soft-buffer and the currently received information and tries to decode the packet based on the combined information. The receiver can also try to decode the transmission individually, however generally performance increases when combining transmissions.

The combining of transmissions refers to so-called soft-combining, where multiple received code-bits/symbols are likelihood combined and solely received code-bits/symbols are code combined (see e.g. D. Chase, "Code combining: A maximum-likelihood decoding approach for combining an arbitrary number of noisy packets," *IEEE Trans. Commun.,* vol. 33, no. 4, pp. 385-393, May 1985 or B.A. Harvey and S. Wicker, "Packet Combining Systems based on the Viterbi Decoder," *IEEE Trans. Commun.,* vol. 42, no. 2/3/4, pp. 1544-1557, April 1994. Common methods for soft-combining are Maximum Ratio Combining (MRC) of received modulation symbols and log-likelihood-ratio (LLR) combining (LLR combing only works for code-bits).

Type II schemes are more sophisticated than Type I schemes, since the probability for correct reception of a packet increases with the number of received retransmissions. This increase comes at the cost of a required hybrid ARQ soft-buffer at the receiver. This scheme can be used to perform dynamic link adaptation by controlling the amount of information to be retransmitted. E.g. if the receiver detects that decoding has been "almost" successful, it can request only a small piece of information for the next retransmission (smaller number of code-bits/symbols than in previous transmission) to be transmitted. In this case it might happen that it is even theoretically not possible to decode the packet correctly by only considering this retransmission by itself (non-self-decodable retransmissions).

Type III: This is a subset of Type II with the restriction that each transmission must be self-decodable.

This invention is related to Type II and Type III schemes, where the received transmissions are soft-combined.

Adaptive Modulation and Coding (AMC) is a link adaptation technique as known for example from R. Love et al, *High speed downlink packet access performance,* Proc. IEEE VTC 2001-Spring, vol. 3, pp. 2234-2238, May 2001. The principle of AMC is to change the modulation and/or coding format in accordance with variations in the channel conditions. The channel conditions can be estimated e.g. based on feedback from the receiver. In a system with AMC, users in favorable positions e.g. users close to the cell site are typically assigned higher order modulation with higher code rates (e.g. 16-QAM with code rate ¾), while users in unfavorable positions e.g. users close to the cell boundary, are assigned lower order modulation with lower code rates (e.g. 16-QAM with code rate ½). In the following the different combinations of coding rates and modulation schemes will be referred to as Modulation Coding Scheme (MCS) levels. A transmission will be split into Transmission Time Intervals (TTI), where the MCS level could change each TTI. In HSDPA the TTI interval is equal to 2 ms. The main benefits of AMC include that firstly higher data rates are available for users in favorable positions which in turn increases the average throughput of the cell and secondly a reduced interference variation due to link adaptation based on MCS selection instead of controlling the transmit power.

High Speed Downlink Packet Access (HSDPA) is a new technique that is standardized from Release 5 within the 3GPP standardization body. It shall provide higher data rates in the downlink by introducing enhancements to earlier releases. Among other enhancements HSDPA employs the link adaptation techniques Adaptive Modulation and Coding (AMC) and hybrid ARQ Type II/III. This functionality is implemented by a 2-stage rate matching requiring a hybrid ARQ (co-called "virtual IR buffer") soft buffer in the receiver. The 2-stage rate matching comprises two consecutive puncturing (rate matching) entities at the transmitter and accordingly two consecutive de-puncturing (de-rate matching) entities at the receiver.

A detailed description of the respective AMC and hybrid ARQ functionality in HSDPA is given in the 3GPP specifications TS 25.212 v. 5.3.0, December 2002 for the Frequency Division Duplex (FDD) mode and in TS 25.222 v. 5.3.0, December 2002 for Time Division Duplex (TDD) mode.

The following description focuses on the HSDPA FDD mode. However, without loss of generality the same principle applies to the HSDPA TDD mode or any other system including uplink transmission employing a 2-stage rate matching (puncturing approach).

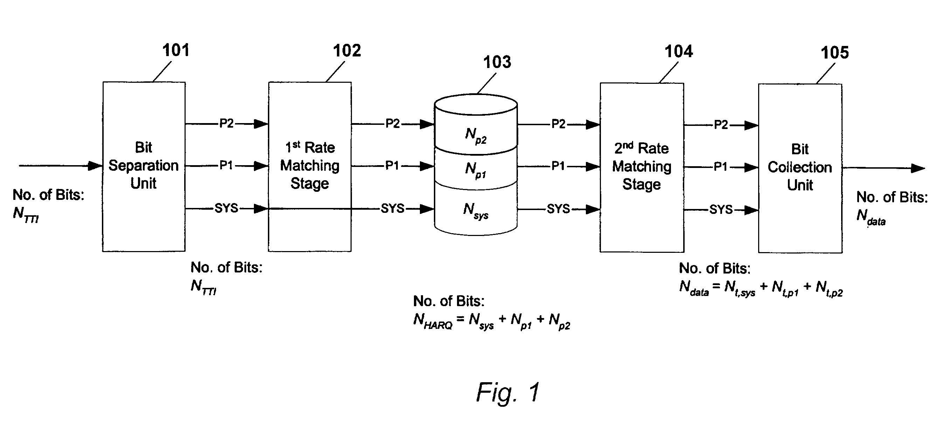

The transmitter implementation is described in the following with reference to figure 1 (see also 3GPP, *Technical specification 25*.*212*; *Multiplexing and channel coding (FDD),* v. 5.3.0, December 2002, chapter 4.5.4)

The *N*_{*TTI*} code bits from the Turbo encoder (see for more details, C. Berrou, A. Glavieux, and P. Thitimajshima, "Near Shannon limit error-correcting coding and decoding: Turbo-codes," *Proc. ICC '93,* Geneva, Switzerland, pp. 1064-1070, May 1993) are separated in a bit separation unit 101 into three streams containing the systematic bit stream (SYS) and two parity bit streams (P1, P2) generated by the Turbo encoder before input to the 1^{st} stage 102 of the rate matching. The 1^{st} rate matching stage 102 then matches the number of input bits to the size of the virtual IR buffer 103 *(N*_{*HARQ*} bits), which is defined by higher layers and is related to the buffer size available for the respective hybrid ARQ process in the receiver (mobile station). The transmitter virtual IR buffer size in terms of bits matches the number of bits the virtual IR buffer at the receiver can store. Note, that the absolute buffer sizes at transmitter and receiver are different. The transmitter stores hard-valued bits [0,1], which require one memory bit per code bit. The receiver stores soft-bits, for which usually 6-8 memory bits per code bit are used (implementation dependent). A soft-bit is a metric representing the probability of a received/demodulated bit being a one or a zero. Typically, log-likelihood-ratios (LLRs) are used for the soft-bit representation, however other metrics are also possible. Note that only the parity bits P1 and P2 are rate matched and the 1^{st} rate matching is transparent for the systematic bits.

The 2^{nd} rate matching stage 104 matches the number of bits after 1^{st} rate matching stage 102 i.e. the number of bits of the virtual IR buffer 103 to the number of physical channel bits *N*_{*data*} available in the TTI and output from bit collection unit 105. This is necessary since AMC can be employed and *N*_{*data*} can vary from transmission to transmission depending on the current channel quality for the respective link.

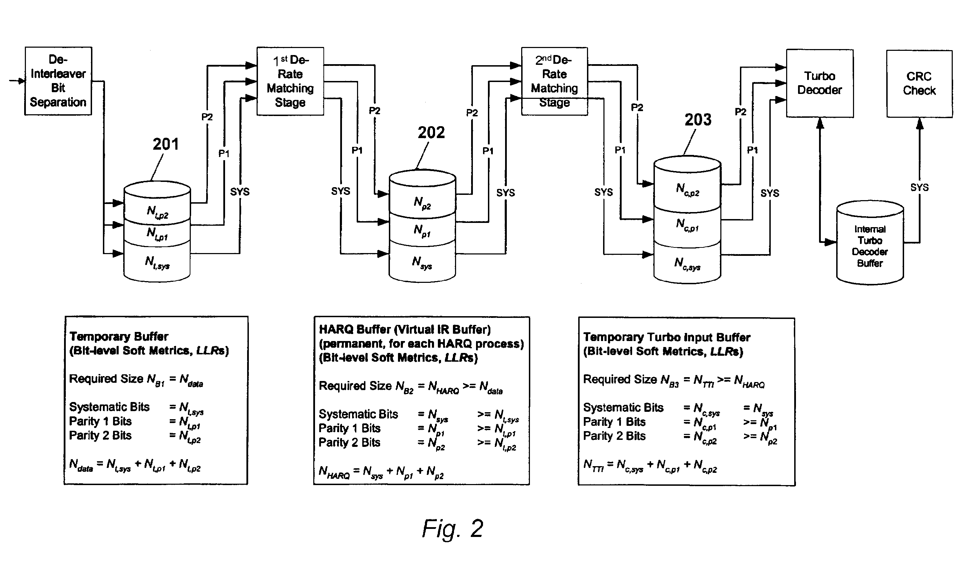

A conventional HSDPA receiver implementation is described in the following in greater detail with reference to Figure 2 including several details regarding the SYS, P1 and P2 bit streams. In the receiver chain several buffers are required to perform appropriate processing of the received data, which is typically processed bit-wise using soft-bits.

The output of the de-interleaver is stored in a temporary buffer 201 using a bit separation unit in order to identify the systematic SYS, parity P1 and parity P2 bit streams. Buffer 201 needs to be capable of storing at least *N*_{*data*} soft-bits. Then the 1 st de-rate matching is performed and the soft bits output form the de-rate matching stage 201 are combined with the content of buffer 202, which is the virtual IR buffer (HARQ buffer). Note that combining is only necessary if a retransmission is received. As shown in the figure, a depuncturing (and combining) of a currently received block of size *N*_{*data*} to HARQ process block of size *N*_{*HARQ*} is performed. Each stream (SYS, P1, P2) is depunctured ("de-rate matched") individually.

The virtual IR buffer 202 holds *N*_{*HARQ*} soft-bits from earlier failed transmissions for hybrid ARQ combining. It will be flushed when the receiver decoded a packet correctly or the transmission of the previous packet has been aborted by any reason. In case of soft-bits, flushing is usually done setting the soft-bit values representing equal probability of zero and one. If dealing with LLRs this means setting the soft-bit values to zero. Thereafter, the 2nd de-rate matching is carried out in the 2^{nd} de-rate matching stage to generate *N*_{*TTI*} soft-bits for appropriate inputting of the Turbo decoder. These *N*_{*TTI*} soft-bits are stored in a temporary buffer 203.

In the second de-rate matching an HARQ block of size *N*_{*HARQ*} is depunctured to a full code block (rate 1/3) for straight Turbo decoding. Only bit streams P1 and P2 are depunctured whereas the de-rate matching stage is transparent to the SYS bits.

In contrast to buffer 201 and buffer 203, buffer 202 is not temporary and will be present as long as the hybrid ARQ process runs, since it needs to keep the soft-bits for combining with further retransmissions of a packet. Note, that several hybrid ARQ processes can run in parallel and the virtual IR buffer for each process can be configured differently.

Moreover, there might be a higher layer procedure which resets the hybrid ARQ processes. Also note, that buffer 203 is usually a high speed access buffer, since the Turbo decoder needs to access the contents of buffer during decoder iterations multiple times.

Note, that the drawings of the buffers 201-203 in the figure show logical buffer units and do not necessarily refer to the physical assignment/segmentation of the buffers in the receiver structure. A supervising buffer management unit in the receiver could be present to make efficient use of the overall available receiver buffer, bearing in mind that the buffer is possibly shared among a number of parallel hybrid ARQ processes.

The complexity of network units of a communication system has a major impact on the cost of the units. This is especially true for the mobile station, because of its compact size and limited battery lifetime. The complexity is, aside by the processing capability, predominantly defined by the required buffer sizes, especially on the downlink, where the mobile station acts as a receiver as in HSDPA and buffers soft-bits for hybrid ARQ.

Therefore, to reduce the receiver complexity and cost a reduction of the required buffer size is desirable.

The object is solved by a method of buffering data at the receiver of a packet transmission communication system as set forth in claims 1 and 12. Further, the above stated object is solved by a receiver as set forth in independent claims 9 and 15.

The invention underlies two principal ideas. The first one is based on the recognition that the buffer for storing the incoming data bit stream is only needed temporarily until the first de-rate mapping operation is completed. It can therefore be used afterwards for storing the data bits obtained upon completion of the second de-rate matching operation. This approach helps to reduce the required buffer size at the receiver and therefore reduces its complexity.

The second idea is to utilize the separation of the data bit streams into a plurality of data bit substreams and to input at least one data bit substreams to the decoder without performing a second de-rate matching and storing operation. This is based on the consideration that the decoder may access at least one of the data bit substreams directly from the HARQ buffer. Consequently, the size of the temporary buffer can be reduced also resulting in simplifying the receiver.

The invention will be described in the following with reference to the accompanying drawings, which show:
- **Figure 1**: a conventional transmitter implementation of AMC and hybrid ARQ functionality in HSDPA;
- **Figure 2**: a conventional receiver implementation of AMC and hybrid ARQ functionality in HSPDA;
- **Figure 3**: a first receiver implementation of AMC and hybrid ARQ functionality in HSPDA for illustrating the buffer saving compared to the implementation shown in Figure 2; and
- **Figure 4**: a second receiver implementation of AMC and hybrid ARQ functionality in HSPDA for illustrating the buffer saving compared to the implementation shown in Figure 2.

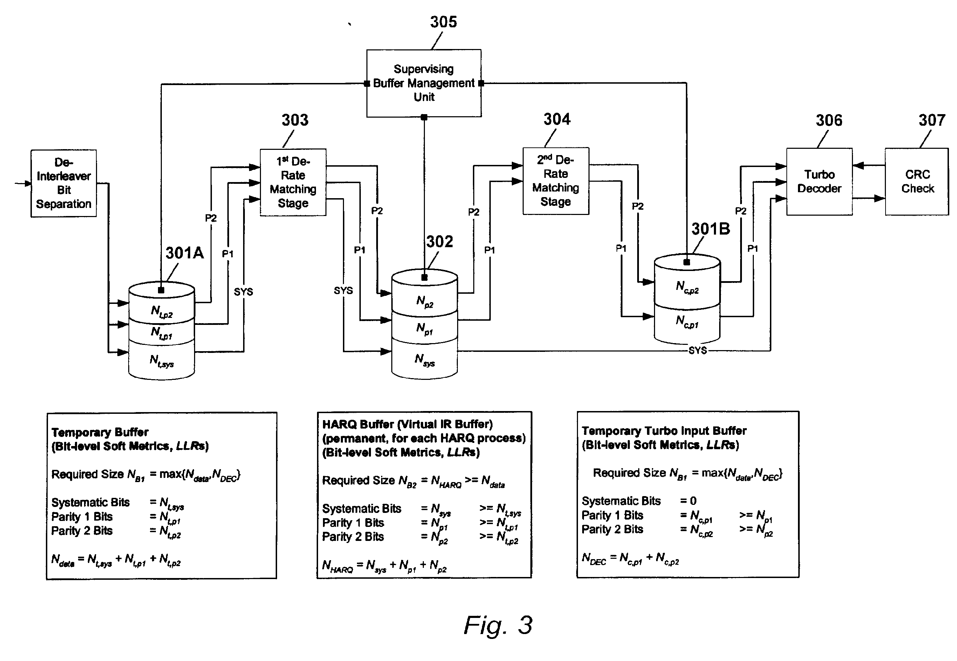

Figure 3 shows a block diagram of a first receiver implementation. An incoming data bit stream is first de-interleaved and separated into a systematic bit substream SYS and two parity bit substreams P1, P2. In buffer 301A, the output of the de-interleaver/bit-separation unit is temporarily stored before being input to the first de-rate matching stage 303. Subsequently, the data bit substreams are input to HARQ (virtual IR) buffer 302. From this buffer only the parity bit streams P1, P2 are input to the second de-rate matching state 304 and subsequently stored in a temporary buffer 301 B which is one and the same entity in which the first storage operation was performed. Due to the buffer management entity 305, which controls the two buffers 301 (A, B) and 302, it is ensured that the buffer 301 is re-used after the second de-rate matching operation is completed for storing parity bit substreams P1, P2 output from the second de-rate matching stage 304.

Since the second de-rate matching operation is not applied on the systematic bit substream (SYS), the required size for the temporary buffer 301 B is reduced and the turbo decoder 306 may access the SYS bits directly from the virtual IR buffer 302. Note that in this case, the access speed requirement for the SYS part of buffer 302 is stricter since the turbo decoder needs to have fast access during iterations.

The required size for the buffers is shown in the figures. More specifically, it is apparent that temporary buffer 301 (A, B) should be capable for storing at least max *(N*_{*data*}*, N*_{*DEC*} *= N*_{*C,P1*} *+ N*_{*C,P2*}*)* soft bits. The output of the turbo decoder is checked by a CRC check unit 308.

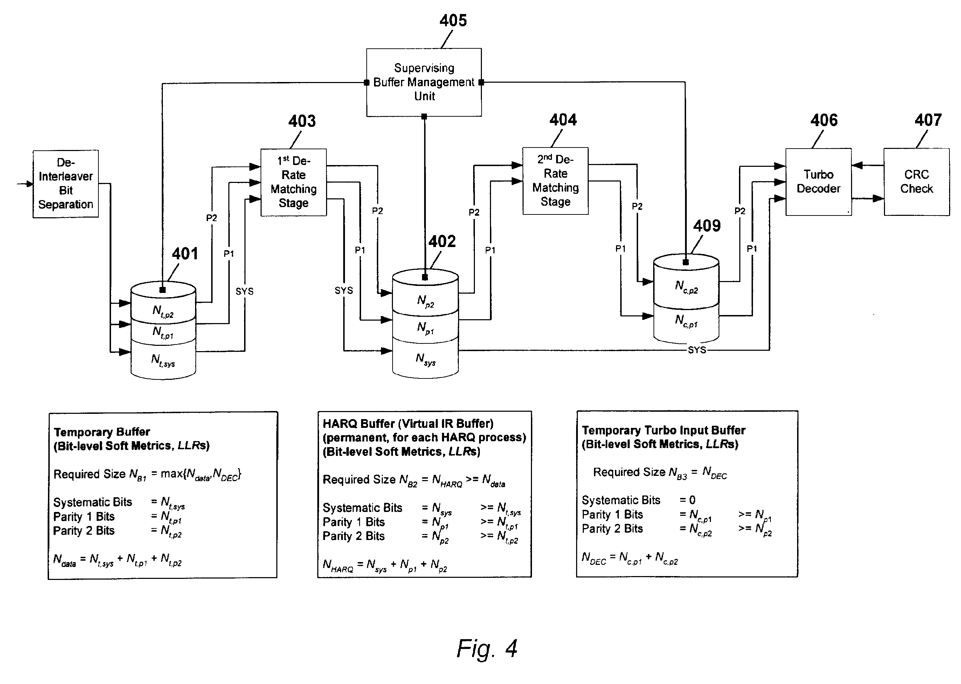

Figure 4 shows a second receiver implementation for obtaining a reduction of the required buffer size.

An incoming data bit stream is first de-interleaved and separated into a systematic bit substream SYS and two parity bit substreams P1, P2. In buffer 401, the output of the de-interleaver/bit-separation unit is temporarily stored before being applied to the first de-rate matching stage 403. Subsequently, the data bit substreams are applied to HARQ (virtual IR) buffer 402. From this buffer only the parity bit streams P1, P2 are applied to the second de-rate matching state 404 and subsequently stored in temporary buffer 409 which is a different storage entity from that in which the first storage operation was performed. Buffer management entity 405 controls the three buffers 401, 402 and 409.

Since the second de-rate matching operation is not applied on the systematic bit substream (SYS), the required size for the temporary buffer 409 is reduced and the turbo decoder 406 may access the SYS bits directly from the virtual IR buffer 402. Note that in this case, the access speed requirement for the SYS part of buffer 402 is stricter since the turbo decoder needs to have fast access during iterations.

The required size for the buffers is shown in the figures. More specifically, it is apparent that temporary buffer 401 should be capable for *N*_{*data*} soft bits and the temporary buffer 409 should be capable for *N*_{*DEC*} *= N*_{*C,P1*} + *N*_{*C,P2*} soft bits. The output of the turbo decoder is checked by a CRC check unit 308.

A comparison between figures 3 and 4 reveals that the main difference consists in the fact that the approach shown in figure 4 uses two different temporary buffers 401 and 409, where the required bit size for temporary buffer 409 is reduced. In contrast, the approach shown in figure 3 uses only one temporary buffer 301 (A, B).

Generally, although in the figure two parity bit streams are shown, it is clear to a skilled person that a system can equally be built using just one parity bit stream. When employing a simpler decoder than the turbo decoder, the complexity of the system can be further reduced.

The disclosed approach helps to reduce the required buffer size at the receiver by re-using physical layer related buffers used during processing the received data in the receiver. Since for the considered ARQ Type II/III schemes soft-bits need to be stored in the receiver, the disclosed implementation is particularly advantageous. This approach is especially of interest for the 3GPP High Speed Downlink Packet Access (HSDPA) technique, where the mobile station acts as a receiver and its complexity is significantly influenced by the required buffer sizes.

## Claims

1. A method of buffering data at the receiver of a packet transmission communication system employing hybrid ARQ type II/III and adaptive coding and modulation schemes, wherein the adaptive coding is performed by a two-stage matching algorithm comprising the steps of:
receiving a data bit stream;
storing the data bit stream in a first buffer;
performing a first de-rate matching operation on the data bits stored in the first buffer;
combining the data bits stored in the first buffer with the data bits from an earlier transmission and storing the combined data bits in a second buffer;
performing a second de-rate matching operation on the combined data bits stored in the second buffer to generate soft-bits for inputting into a decoder; and
re-using the first buffer to store the data bits which are obtained upon completion of the second de-rate matching operation.

2. The method according to claim 1, further comprising the steps of separating the data stream into a plurality of data bit streams prior to the steps of storing and de-rate matching.

3. The method according to claim 2, where the plurality of data bit streams are input into the decoder from different buffers.

4. The method according to claim 2 or 3, wherein the data bit stream is separated in at least one parity bit stream and at least one systematic bit stream.

5. The method according to claim 4, wherein the second de-rate matching operation is performed on the at least one parity bit stream and the systematic bit stream is directly input into the decoder from the second buffer.

6. The method according to one of claims 1 to 5, further comprising the step of deinterleaving the received data bit stream prior to the steps of storing and de-rate matching.

7. The method according to one of claims 1 to 6, wherein the de-rate matching operation is a de-puncturing operation.

8. The method according to one of claims 1 to 7, wherein the data is transmitted in the communication system employing a high speed downlink packet access frequency division duplex mode or time division duplex mode.

9. A receiver of a packet transmission communication system employing hybrid ARQ type II/III and adaptive coding and modulation schemes, wherein the adaptive coding is performed by a two stage rate matching algorithm, comprising:
a first buffer for storing a received data bit stream;
a first de-rate matching entity for performing a de-rate matching operation on the data bits stored in the first buffer;
a second buffer for combining the bits output from the first de-rate matching entity with data bits from earlier transmissions and storing the combined bits;
a second de-rate matching entity data bits for performing a de-rate matching operation on the combined data bits stored in the second buffer; and
a buffer management entity for controlling the first buffer to store the data bits output from the second de-rate matching entity.

10. The receiver according to claim 9 wherein the first buffer is a temporary buffer and the second buffer is a permanent HARQ buffer.

11. The receiver according to claim 10, wherein the size of the first buffer is the maximum of the number of data bits available in a transmission time interval and the number of data bits output from the second de-rate matching stage.

12. A method of buffering data at the receiver of a packet transmission communication system employing hybrid ARQ type II/III and adaptive coding and modulation schemes, wherein the adaptive coding is performed by a two-stage rate matching algorithm comprising the steps of:
receiving a data bit stream;
separating the data bit stream into a plurality of data bit substreams;
storing the data bit substreams in a first buffer;
performing a first de-rate matching operation on the plurality of data bit streams stored in the first buffer;
combining the data bit substreams stored in the first buffer with the data bit substreams from the earlier transmissions and storing the combined data bit substreams in a second buffer;
performing a second de-rate matching operation for at least one data bit substream stored in the second buffer;
storing the at least one data bit substream for which the second de-rate matching operation has been performed in a third buffer; and
inputting the data bit substreams into a decoder, wherein at least one data bit substream is output from the third buffer and at least one data bit substream is output from the second buffer and directly input to the decoder without performing a second de-rate matching and storing operation in third buffer.

13. The method according to claim 12, wherein the separation is performed into at least one data bit substream for parity data bit and at least one data bit substream for systematic bits.

14. The method according to claim 13, wherein the data bit substream for which the second de-rate matching operation is performed is the parity bit stream and the data bit substream, which is directly input into the decoder from the 2^{nd} buffer is the systematic bit stream.

15. A receiver of a packet transmission communication system employing hybrid ARQ types II/III and adaptive coding and modulation schemes, wherein the adaptive coding is performed by a two stage rate matching algorithm comprising:
a separation entity for separating a received data bit stream into a plurality of data bit substreams;
a first buffer for storing the separated data bit substreams;
a first de-rate matching entity for performing a first de-rate matching operation on the plurality of data bit substreams;
a second buffer for combining the data bit substreams stored in the first buffer with data bits from earlier transmissions and storing the combined data bit substreams;
a second de-rate matching entity for performing a second de-rate matching operation on the combined data bit stream stored in the second buffer;
a third buffer for storing the data bit substreams output from the second de-rate matching entity; and
a buffer management entity for controlling the buffers and de-rate matching entities to input at least one data bit substream into a decoder output from the third buffer and at least one data bit substream output from the second buffer without performing a second de-rate matching and storing operation in the third buffer.

16. The receiver according to claim 14 or 15, wherein the first and third buffer are temporary buffers and the second buffer is a permanent HARQ buffer.

17. The receiver according to one of claims 14-16, wherein the size of the third buffer is sufficient to hold the number of data bits output from the second de-rate matching stage.

18. The receiver according to one of claims 14-17, wherein the first and third buffer are one and the same entity which are selectively activated by the buffer management entity to perform the storing operation at different times.
